# EUROPEAN PATENT APPLICATION

(11) **EP 3 656 542 A1**
(43) Date of publication of application: **27.05.2020**
(21) Application number: 18207802.2
(22) Date of filing: 22.11.2018
(51) Int. Cl.: B29C 64/209, B33Y 10/00, B33Y 30/00, B29C 64/393, B29C 64/321, B29C 64/188, B29C 64/118

(54) **THREE-DIMENSIONAL PRINTING PROCESS**

(71) Applicant: Siemens Aktiengesellschaft, 80333 München (DE)
(72) Inventor: Schenk, Bernhard, 90537 Feucht (DE); Ceriani, Nicola Maria, 91052 Erlangen (DE)

(57) **Abstract**

What is proposed is a rod feed head (12) being integrable into a three-dimensional printer (2), comprising at least one actuator (13, 14) which is designed for driving a rod (11) through the rod feed head (12) and inserting the rod (11) into a structural element (10) printed by a three-dimensional printer (2).

## Description

The present disclosure is directed to a rod feed head being integrable into a three-dimensional printer according to claim 1. Furthermore, the present disclosure is directed to a rod feed system according to claim 7. Still further, the present disclosure is directed to a three-dimensional printer, comprising at least one rod feed system and at least one print head system, according to claim 10. Still further, the present disclosure is directed to a method according to claim 14. Still further, the present disclosure is directed to a computer program product, comprising control instructions for a three-dimensional printer, according to claim 20.

One of the most common technologies used in additive manufacturing (AM) is fused deposition modeling (FDM). Fused deposition modeling is a form of material extrusion (ME) of thermoplastic materials using a print head that is moved by numerically controlled kinematics with three or more independent axes.

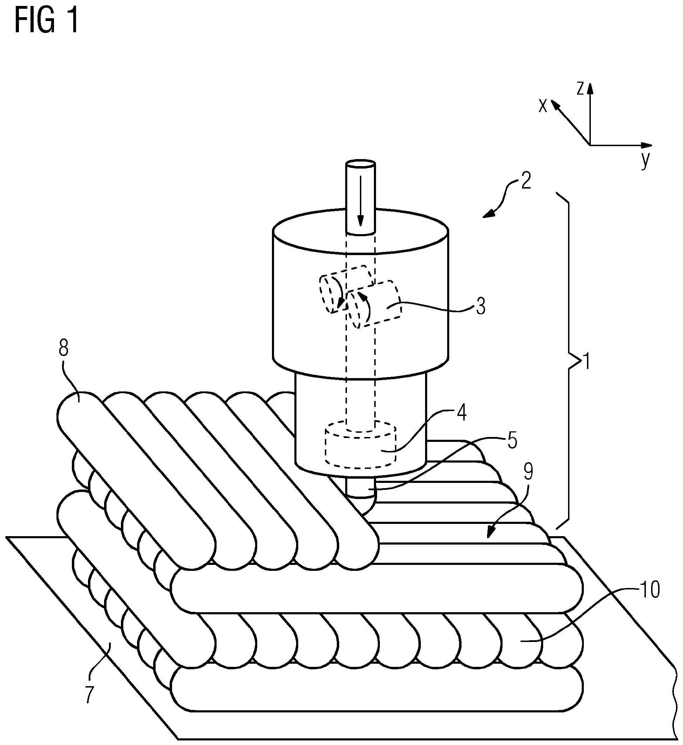

FIG 1 illustrates a typical FDM process using a print head 1 of a three-dimensional printer 2 (other components of the three-dimensional printer 2 besides the print head 1 are not shown in FIG 1). The print head 1 comprises a material feed 3, a heated melt zone 4 and an extrusion nozzle 5.

A solid base material 6 comes out of a reservoir (not shown) and is fed through the print head 1. In the melting zone the material 6 is molten. After that it flows out of the extrusion nozzle 5 onto a build plate 7 of the three-dimensional printer 2 to apply molten material 6 to a surface of the build plate 7 to build a printed part 10. By moving the print head 1 relative to the build plate 7, the material 6 is deposited in strings 8 along one first axis X, respectively in a first dimension. The strings 8 are placed in a defined pattern relative to each other along a second axis Y (second dimension) to form a layer 9; subsequent layers 9 are stacked on top of underlying layers 9 along a third axis Z (third dimension).

Parts 10 built up in this way exhibit a significant anisotropy, because the tensile strength achieved by the material cohesion along a string 8 is significantly higher than the material adhesion and punctual joints of molten material 6 between neighbored strings 8.

A common way to reduce the overall anisotropy of the printed part 10 (at least in the plane "X-Y" in FIG 1) is to alter the orientation of the strings 8 from layer 9 to layer 9.

If the expected forces that will be applied to the printed part 10 later on are known in detail, the orientation of the strings 8 can also be defined using a computer aided manufacturing (CAM) system that orients the string deposition in an optimum way to withstand the anticipated forces.

None of these two approaches is able to mitigate the problem of a rather weak binding between the layers 9.

Several methods are known to improve binding between the layers 9:
At first, the problem can be mitigated by orienting the printed part 10 in a way that only low tensional forces are applied along the third axis Z.

It can also be mitigated by oversizing the printed part 10 in a way that also the weakest tensile strength axis still can withstand the anticipated tension forces. Both methods result in a non-optimal material utilization and larger/heavier printed parts 10.

Furthermore, if a 5-axis three-dimensional printer is used, strings 8 can also be deposited along the (re-oriented) Z-axis, but this needs a significantly higher mechanical and programming effort.

Still further, it is possible to transform a mainly adhesion based tensile strength into cohesion forces by partial dissolving of the strings 8 using chemical or thermal treatment in a post-processing step, e.g. by applying acetone to the printed part 10 or putting the printed part 10 into a microwave or heated oven. Disadvantageously, this approach requires one or more additional process steps and has typically to be performed in separate equipment outside the three-dimensional printer 2.

A three-dimensional printing system is disclosed in US 5 121 329 A. The printing system includes a movable dispensing head provided with a supply of material that solidifies at a certain temperature and an apparatus to move the head relative to a base structure in a predefined way to create layers that stack up to three-dimensional objects.

Another three-dimensional printing system is disclosed in WO 2014/197732 A2. The disclosed printing system extends the printing system from above with the usage of a fiber feed system. The printing head can include a cutter to cut the reinforcing fiber at a desired length. The reinforcement structures are laid together with or at least in the same orientation with the solidified base material. Thereby, a tensile strength of the deposited material is slightly but not sufficiently increased. A conjunction between several layers of the printed structural element is insufficient.

An objective of the present invention is to increase a rigidity of parts printed by a three-dimensional printer.

The problem is solved by a rod feed head being integrable into a three-dimensional printer according to claim 1. Furthermore, the problem is solved by a rod feed system according to claim 7. Still further, the problem is solved by a three-dimensional printer, comprising at least one rod feed system and at least one print head system, according to claim 10. Still further, the problem is solved by a method according to claim 14. Still further, the problem is solved by a computer program product, comprising control instructions for a three-dimensional printer, according to claim 20. Advantageous aspects of the invention are the subject of the dependent claims.

The rod feed head is integrable into a three-dimensional printer. According to the invention, the rod feed head comprises an actuator which is designed for driving a rod through the rod feed head and inserting the rod into a structural element printed by a three-dimensional printer, so that the rod is extendable over at least two layers of the structural element.

The three-dimensional printer can be of a conventional type, designed to deposit a filler material within a build chamber.

The structural element can be of any shape being printable by means of a three-dimensional printer.

The rod is a kind of wire spike which can be inserted into the structural element. Thereby, it is designed for breaking through several layers of the structural element.

A rod feed system according to the invention comprises a rod feed head as described above and at least one rod. The rod can be preferably made of a metal. By inserting the at least one rod into structural element, which has been printed by means of a three-dimensional printer, the adhesion between different layers of the printed structural element can be increased.

To ensure a strong adhesion between the rod and the printed structural element, a suitable surface quality and structure of the rod is advantageous. Consequently, the surface of the rod may have a screw-like winded structure. Preferably, the rod feed head may be conclusively designed for bringing the rod into a rotation while the rod is inserted into the structural element printed by the three-dimensional printer. Thereby, the insertion of the rod can be eased.

In a preferred embodiment of the invention, the rod feed head comprises an electrical heating that is designed for heating the rod electrically. By heating the rod, there can be reached an advantageous trade-off between an insertion force, being necessary to insert the rod into the structural element, and an adhesion force between the rod and the layers of the structural element. Most preferably, the rod is made of a metal and is heated electrically. The metal can be heated to high temperatures which results in an increased local melting of the structural element and an eased inserting of the rod into the structural element.

The electrical heating can be designed for allowing a heating current flow directly through the rod to heat the rod electrically. "Directly" means that e.g. the rod is connected via two contacts to a power supply of the rod feed head. Alternatively, the electrical heating can be based on induction.

In a further preferred embodiment of the invention, the rod feed head comprises a cutter that is designed for cutting the rod automatically when the rod has been inserted into the structural element printed by the three-dimensional printer. By means of the cutter, the rod can be cut right above the surface of the structural element after the rod has been inserted into the structural element .

The rod can be inserted into structural element at an arbitrary insertion angle, depending on a kinematics of the rod feed head. Preferably, a plurality of rods is inserted into the structural element while the insertion angle can vary between the rods to increase a tension strength inside the structural element since the tilted rods can realize a form closure.

Also, the rods can be inserted into the structural element at different times of the three-dimensionally printing process. For example, one rod can be inserted into the structural element when layer X has been printed, two additional rods can be inserted when layer Y has been printed and five additional rods can be inserted when layer Z has been printed. Further parameters of the rods can also vary, e.g. length, cross-sectional area, material and so on.

The rod feed head, respectively the rod feed system, as described above can be part of a three-dimensional printer. This three-dimensional printer additionally comprises a print head system. This print head system is designed for printing a structural element three-dimensionally. The rod feed system has to be integrated into the three-dimensional printer (and further associated systems). The at least one rod feed system and the at least one print head system can be designed for using the same controllers and kinematics. In other words, both print head (system) and rod feed (system) are arranged on the same mounting and share the complete kinematic chain and control equipment. Thereby, no additional kinematics is needed to integrate the rod feed system into the three-dimensional printer.

In a further preferred embodiment of the invention, the at least one rod feed system and the at least one print head system are designed for using controllers and kinematics that are partially independent from each other. This means that the print head system and the rod feed system share at least one common axis, but they can be moved independently from each other in the remaining axes. Due to the layer-wise manufacturing process, the shared axis may be the (vertical) Z-axis.

In a still further embodiment of the invention, the at least one rod feed system and the at least one print head system are designed for using controllers and kinematics that are completely independent from each other. For example, the rod feed head, respectively the rod feed system, can be moved by a 6-axis robot arm inside a large-scale Cartesian 3-axis three-dimensional printer.

The problem is also solved by a computer program product comprising control instructions for a three-dimensional printer as described above, which, when the program is executed by a controller of the three-dimensional printer, causes the three-dimensional printer to carry out the steps of the method as described above (at least printing the structural element and inserting at least one rod into the printed structural element).

The computer program product advantageously comprises optimization algorithms that create control instructions which consider optimized rod-insertion parameters (e.g. insertion depth, insertion location and so on).

A three-dimensional printer is equipped with a controller that reads a part program (typically using "G-Code"-syntax) describing the desired movements as input. Based on that program the axes of the printer are then controlled to perform the desired movements. The control system is called CNC here, like the control systems found in machine tools. As for non-trivial parts, it is not sensible to write a part program manually, a CAD-CAM (computer aided design - computer aided manufacturing) software toolchain is used in most cases to generate the code based on a three-dimensional model of the desired geometry.

The additional functionalities and control interfaces of the proposed rod feed system have to be considered in the complete toolchain:
- A placement, an orientation and an insertion depth of the rods have to be planned in a suitable way, either manually or, preferably, via (optimization) algorithms.
- The inserted rods should not protrude over the surface of the printed structural element (if not desired to do so).
- Every inter-layer connection can be bridged by a suitable number of rods.
- To ensure that the printed structural element is not damaged while inserting the rod, this process step has already to be considered when defining the three-dimensional printing operations, especially the infill structures of the element. The "density" of the printed structural element part has to be defined in a way that there is enough space inside the printed geometry to integrate further material (here for example: metal rods) without influencing the outer shape and geometry of the printed structural element.
- If the expected forces that will be applied to the printed structural element later on are known in detail, the placement, orientation and insertion depth of the rods can also be defined using a simulation and optimization functionality inside the CAM system that defines these process parameters in an optimum way to withstand the anticipated forces.
- If the print head (system) and the rod feed (system) have at least one independent degree of freedom, the movements of the two heads have to be coordinated to avoid collisions.

The invention as described above is not limited to be used only to strengthen a three-dimensional printed structural element mechanically. It can also be used to add conductive rods as defined electrical conductors into the printed structural element to enable mechatronic functionalities.

Features of examples of the present disclosure will become apparent by reference to the following detailed description of the drawings. For the sake of brevity, reference numerals or features having a previously described function may or may not be described in connection with other drawings in which they appear.
- FIG 1: is a perspective view of a structural element printed by means of a conventional three-dimensional printer;
- FIG 2: shows a structural element with inserted rods;
- FIG 3: shows a rod feed head inserting rods into a structural element;
- FIG 4: shows a first three-dimensional printer comprising a rod feed head; and
- FIG 5: shows a second three-dimensional printer comprising a rod feed head.

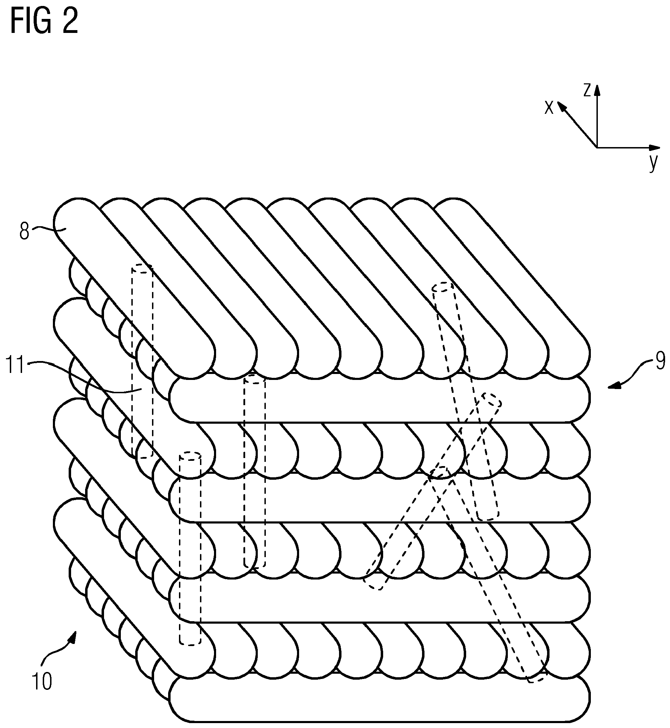

In FIG 2 there is depicted a structural element 10 which has been printed by means of a three-dimensional printer 2 (not shown). For example, a molten solid based raw material can be used to print the structural element 10. The molten raw material is deposited in strings 8 along one first axis X, respectively in a first dimension. The strings 8 are placed in a defined pattern relative to each other along a second axis Y (second dimension) to form a layer 9. Subsequent layers 9 are stacked on top of underlying layers 9 along a third axis Z (third dimension).

There has been inserted a plurality of rods 11 into the structural element 10. The rods 11 are made of metal and go through several layers 9 of the structural element 10. The rods 11 have been partially inserted at different angles into the structural element 10 so that they are arranged at different orientations within the structural element 10. The rods 11 are cylindrical shaped but may have other shapes suitable for the insertion into the structural element 10. Further, the rods 11 are extended over at least two layers 9 of the structural element 10. Conclusively, the rods 11 increase a tensional strength along the Z-axis of the printed structural element 10 (which is typically the weakest in a printed structural element 10). Therefore, an anisotropy within the structural element 10 is reduced.

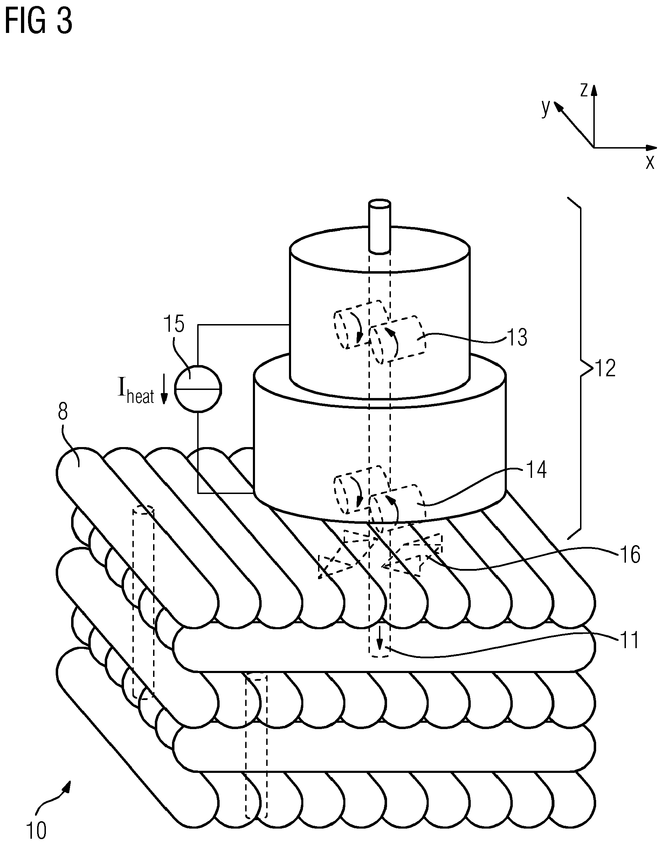

FIG 3 illustrates a process of inserting rods 11 into the structural element 10 by means of a rod feed head 12. The rod feed head 12 comprises two actuators 13, 14 which are designed for driving a cylindrical rod 11 into the structural element 10. The actuators 13, 14 can be designed for bringing the rod 11 into rotation while the rod 11 is inserted into the structural element 10. In this case, a surface of the rod 10 preferably has a screw-like winded structure to improve the insertion process.

The rod feed head 12 also comprises an electrical heating 15 which comprises a current source which allows a heating current Iₕₑₐₜ flow through the rod 11 to heat the rod 11 electrically. The rod feed head 12 further comprises a cutter 16 which is designed for cutting the rod 11 automatically when the rod 11 has been inserted into the structural element 10. The cutter 16 cuts the rod 11 as near as possible to the surface of the printed structural element 10.

An insertion force may be applied in one of the following ways: Either the rod feed head 12 is located directly on the surface of the structural element 10 and the insertion force is applied by the wire feed actuators 13, 14; or the rod feed head 12 is located at a suitable distance from the structural element and the rod 11 is first driven out of the rod feed head 12 and then a -Z-axis movement of the rod feed head 12 applies the necessary insertion force.

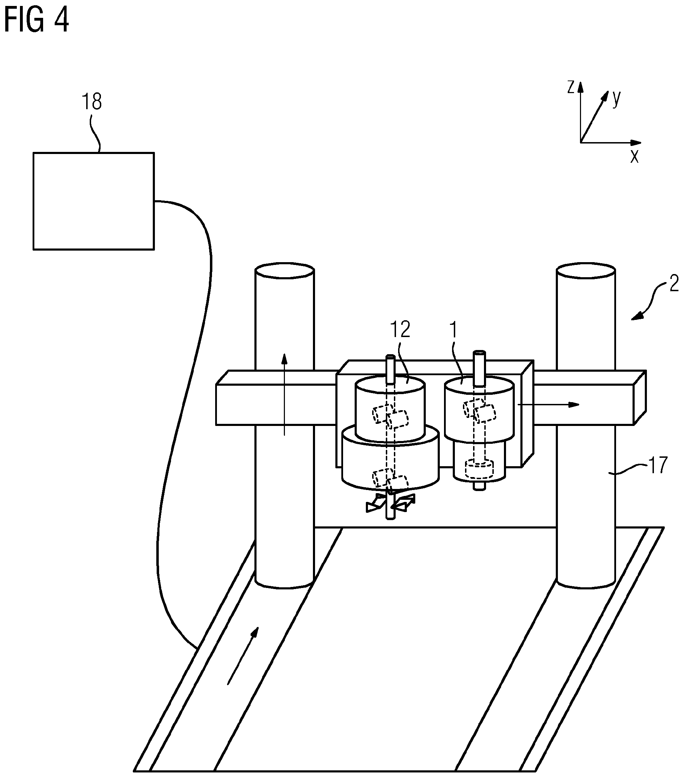

In FIG 4 there is depicted a three-dimensional printer 2 which comprises a conventional print head (system) 1 and a rod feed head 12 according to the invention. Both print head 1 and rod feed head 12 are placed on a same mounting 17 of the three-dimensional printer 2. Both heads 1, 12 share a complete kinematic chain. This results in that both heads 1, 12 can only be moved simultaneously in a X-, Y or Z-direction. The three-dimensional printer 2 only comprises one single control equipment 18 which generates the necessary control operations for both heads 1, 12. Advantageously, a conventional three-dimensional printer 2 can be equipped with a rod feed head 12 according to the invention to improve the three-dimensional printer 2 significantly - without the need of changing hardware of the three-dimensional printer 2.

The rod feed head 12 can rather easily be integrated into the commonly used three-dimensional printer structures. No additional processing stations like chemical reactors or heating ovens are needed. The embodiment stays in the same technical domain as a conventional three-dimensional print process, i.e. motion control in three or more axes and controlled heating of function elements using electrical current. Therefore, there should be no completely new safety requirements (e.g. chemical hazards) or protective elements needed in the three-dimensional printer 2.

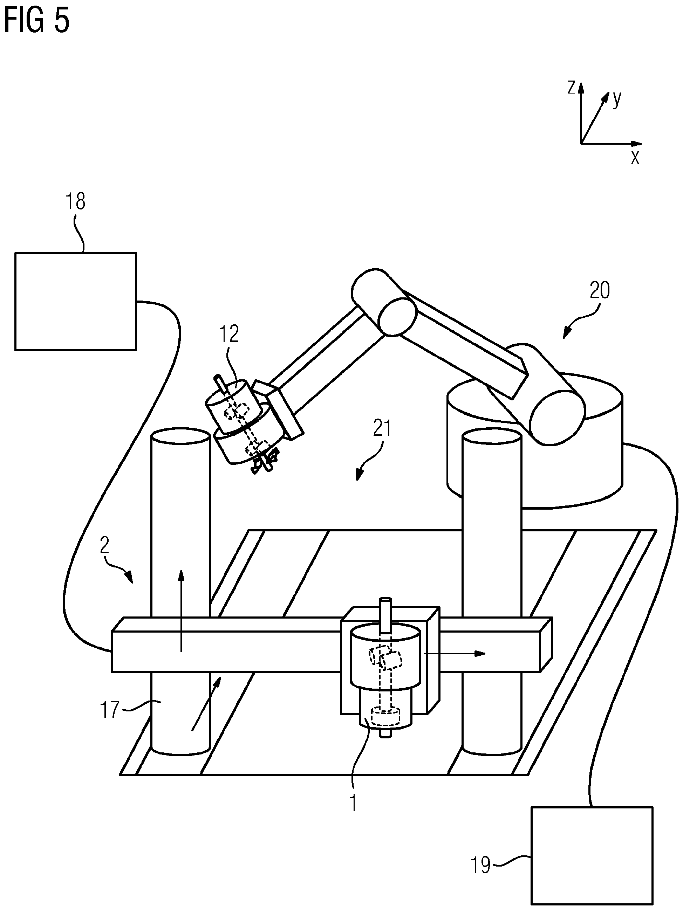

FIG 5 shows a second three-dimensional printer 18. It comprises a conventional print head 1 being arranged on a mounting 17. The three-dimensional printer 18 also comprises a rod feed head 12 according to the invention. The rod feed head 12 has, in contrast to the embodiment in FIG 4, its own kinematic chain 20 and control equipment 19. The rod feed head 12 can be moved completely independent from the print head 1 within a same working area 21 of the three-dimensional printer 2. The rod insertion can be performed in parallel to the printing time, resulting in a more efficient use of the three-dimensional printer 2 by shortening the overall production time.

While several examples have been described in detail, it is to be understood that the disclosed examples may be modified. Therefore, the foregoing description is to be considered non-limiting.

## Claims

1. Rod feed head (12) being integrable into a three-dimensional printer (2), comprising at least one actuator (13, 14) which is designed for driving a rod (11) through the rod feed head (12) and inserting the rod (11) into a structural element (10) printed by a three-dimensional printer (2), so that the rod is extendable over at least two layers (9) of the structural element (10).

2. Rod feed head (12) according to claim 1, wherein the rod feed head (12) comprises an electrical heating (15) that is designed for heating the rod (11) electrically.

3. Rod feed head (12) according to claim 2, wherein the electrical heating (15) is designed for allowing a heating current (Iₕₑₐₜ) flow directly through the rod (11) to heat the rod (11) electrically.

4. Rod feed head (12) according to claim 2 or 3, wherein the electrical heating (15) is based on induction.

5. Rod feed head (12) according to one of the preceding claims, comprising a cutter (16) that is designed for cutting the rod (11) automatically when the rod (11) has been inserted into the structural element (10) printed by the three-dimensional printer (2).

6. Rod feed head (12) according to one of the preceding claims that is designed for bringing the rod (11) into a rotation while the rod (11) is inserted into the structural element (10) printed by the three-dimensional printer (2).

7. Rod feed system, comprising a rod feed head (12) according to one of claims 1 through 6 and a rod (11).

8. Rod feed system according to claim 7, wherein the rod (11) is made of a metal.

9. Rod feed system according to claim 7 or 8, wherein a surface of the rod (11) has a screw-like winded structure.

10. Three-dimensional printer (2), comprising at least one rod feed system according to one of claims 7 through 9 and at least one print head system (1), the print head system (1) being designed for printing a structural element (10) three-dimensionally.

11. Three-dimensional printer (2) according to claim 10, wherein the at least one rod feed system and the at least one print head system (1) are designed for using the same controllers (18, 19) and kinematics (20).

12. Three-dimensional printer (2) according to claim 10, wherein the at least one rod feed system and the at least one print head system (1) are designed for using controllers (18, 19) and kinematics (20) that are partially independent from each other.

13. Three-dimensional printer (2) according to claim 10, wherein the at least one rod feed system and the at least one print head system (1) are designed for using controllers (18, 19) and kinematics (20) that are completely independent from each other.

14. Method, comprising:
a) Printing a structural element (10) by means of a three-dimensional printer (2), whereas the structural element comprises a plurality of layers (9);
b) Inserting at least one rod (11) into the structural element (10), so that the rod (11) is extended over at least two layers (9) of the structural element (10).

15. Method according to claim 14, wherein a plurality of rods (11) is inserted into the structural element (10) at different insertion angles.

16. Method according to claim 14 or 15, wherein the at least one rod (11) is made of a metal.

17. Method according to one of claims 14 through 16, wherein a surface of the at least one rod (11) has a screw-like winded structure.

18. Method according to one of claims 14 through 17, wherein the at least one rod (11) is heated before inserting into the structural element (10).

19. Method according to one of claims 14 through 18, wherein the at least one rod (11) is cut after having been inserted into the structural element (10).

20. A computer program product comprising control instructions for a three-dimensional printer (2) according to one of claims 10 through 13, which, when the program is executed by a controller (18, 19) of the three-dimensional printer (2), causes the three-dimensional printer (2) to carry out the steps of the method according to one of claims 14 through 19.
